# EUROPÄISCHE PATENTSCHRIFT

(11) **EP 1 176 360 B1**
(45) Veröffentlichungstag und Bekanntmachung des Hinweises auf die Patenterteilung: **18.02.2004**
(21) Anmeldenummer: 01116163.5
(22) Anmeldetag: 04.07.2001
(51) Int. Cl.: F21S 8/10, B60Q 1/26, F21V 8/00

(54) **Fahrzeugleuchte**
Vehicle light
Feu pour véhicule

(30) Priorität: 26.07.2000 DE 10036325
(43) Veröffentlichungstag der Anmeldung: 30.01.2002
(73) Patentinhaber: Hella KG Hueck & Co., 59552 Lippstadt (DE)
(72) Erfinder: Henneböhle, Klaus, 33142 Büren (DE); Püttmann, Heinz-Albert, 59077 Hamm (DE)

(56) Entgegenhaltungen:
- DE-A- 4 129 094
- DE-A- 19 547 861
- DE-U- 29 807 774

## Beschreibung

Die Erfindung betrifft eine Fahrzeugleuchte bestehend aus einem am Fahrzeug festsetzbaren Grundteil und einer mit dem Grundteil verbundenen lichtdurchlässigen Abschlussscheibe wobei in dem Grundteil über- oder nebeneinander verlaufende, langgestreckte Lichtleitelemente angeordnet sind.

Eine derartige Fahrzeugleuchte ist aus dem deutschen Gebrauchsmuster DE 298 07 774 U1 bekannt. Hierbei sind mehrere langgestreckte Lichtleitelemente übereinanderverlaufend in einem Leuchtengehäuse angeordnet. Das Leuchtengehäuse wird von einer lichtdurchlässigen Abschlussscheibe abgedeckt, die einen den langgestreckten Lichtleitelementen zugeordneten optikfreien Bereich aufweist. Nachteilig an einer solchen bekannten Leuchte ist es, dass die Lichtleitelemente einzelne Bauteile sind, die in dem Leuchtengehäuse einzeln gehaltert werden müssen und dass die Fahrzeugleuchte über keine gesetzlich vorgeschriebene Rückstrahlerfläche verfügt, die in diesem Fall als zusätzliches Bauteil am Fahrzeug angeordnet werden muss.

Aufgabe der Erfindung ist es, eine gattungsgemäße Fahrzeugleuchte derart weiterzubilden, dass die Anzahl der Bauteile selbst bei Integration der Rückstrahlerfunktion noch reduziert ist, wobei die Großflächigkeit des Signalbildes der Leuchte nicht verringert wird.

Diese Aufgabe wird erfindungsgemäß dadurch gelöst, dass die Lichtleitelemente deutlich beabstandet zueinander angeordnet sind und in den so entstandenen Zwischenräumen Rückstrahlertripel angeordnet sind, die zumindest partiell als optisch wirksame Rückstrahlertripel ausgebildet sind.

Vorteilhafterweise sind die Lichtleitelemente und die Rückstrahlertripel einstükkig ausgeführt, um die Anzahl der Bauteile und den Montageaufwand zu minimieren.
Die Rückstrahlertripel und die Lichtleitelemente sind über schmale Stege miteinander verbunden, damit es in den Anbindeflächen zu möglichst geringen Lichtwertverlusten kommt.
Zweckmäßigerweise sind alle als Spiegelreflexionstripel ausgebildeten Rückstrahlertripel parallel der gewünschten Rückstrahlerfunktionsrichtung ausgerichtet, was in den gefeilten und/oder geneigten Bereichen der Leuchte durch eine stufige Anordnung der Rückstrahlertripel erreicht wird.
Die Rückstrahlertripel sind auf ihrer der Abschlussscheibe zugewandten Seite reflektierend beschichtet, vorzugsweise metallbedampft.
Die Abschlussscheibe ist zumindest partiell optikfrei ausgeführt, wodurch die Leuchte ein optisch ansprechendes Design erhält und die Herstellkosten der Abschlussscheibe gemindert werden.

Ein vorteilhaftes Ausführungsbeispiel der Erfindung ist in den Zeichnungen dargestellt. Und zwar zeigen:

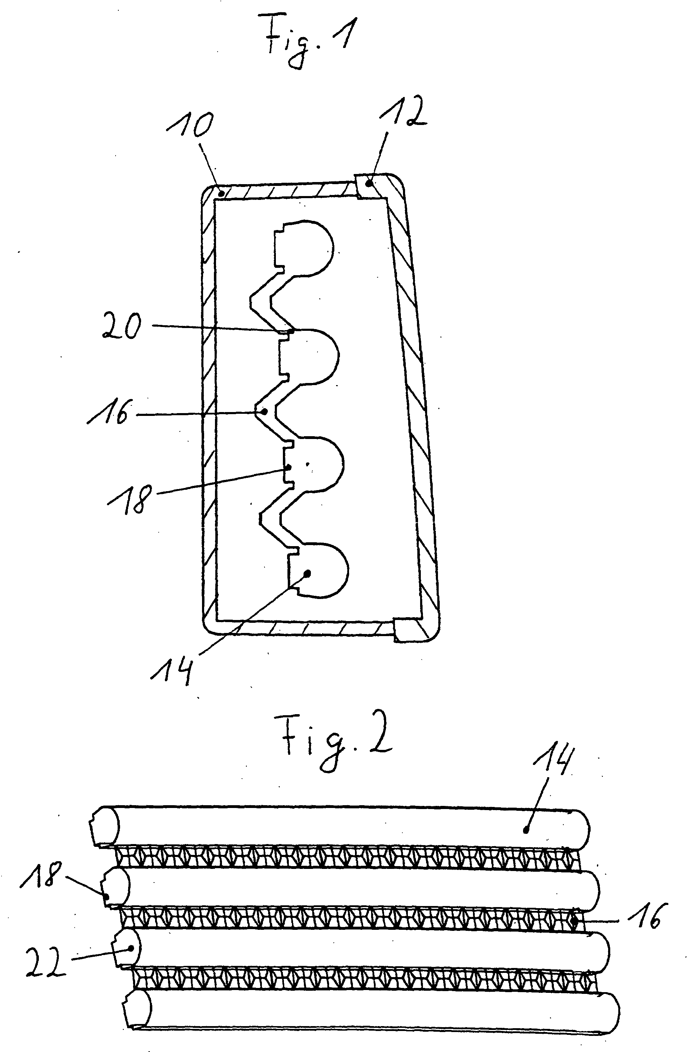

- Figur 1:: eine geschnittene Seitenansicht einer erfindungsgemäßen Leuchte
- Figur 2:: eine Vorderansicht auf die Lichtleitelemente mit dazwischenliegenden Rückstrahlertripeln und
- Figur 3:: eine andere Ausführungsform der in Figur 2 dargestellten Elemente.

Die Fahrzeugleuchte besteht aus einem am Fahrzeug festsetzbaren Grundteil (10) und einer mit dem Grundteil (10) verbundenen lichtdurchlässigen Abschlussscheibe (12). In dem so entstandenen Gehäuseinnenraum sind deutlich beabstandet zueinander vier übereinander verlaufende, langgestreckte Lichtleitelemente (14) angeordnet. Die Lichtleitelemente (14) sind über schmale Stege (20) mit in den Zwischenräumen angeordneten Rückstrahlertripeln (16) verbunden. Die direkte Anbindung der Lichtleitelemente (14) mit den Rückstrahlertripeln (16) ermöglicht es, die Bauelemente in einem Arbeitsschritt als Kunststoffspritzling herzustellen. Die freien Enden der Lichtleitelemente (14) sind als Lichteinkoppelbereiche (22) für hier nicht dargestellte Leuchtmittel, vorzugsweise LEDs ausgebildet. Das so in die Lichtleitelemente eingekoppelte Licht wird an den Lichtumlenkprismen (18), die auf der nicht der Abschlussscheibe (12) zugewandten Mantelfläche der Lichtleitelemente (14) angeformt sind, in Richtung der Abschlussscheibe (12) umgelenkt. Die Rückstrahlertripel (16) sind auf ihrer der Abschlussscheibe (12) zugewandten Seite reflektierend metallbedampft. So wird erreicht, dass das von außen durch die Abschlussscheibe (12) auf die Rückstrahlertripel (16) fallende Licht durch Spiegelreflexion in die gewünschte Rückstrahlerfunktionsrichtung reflektiert wird.

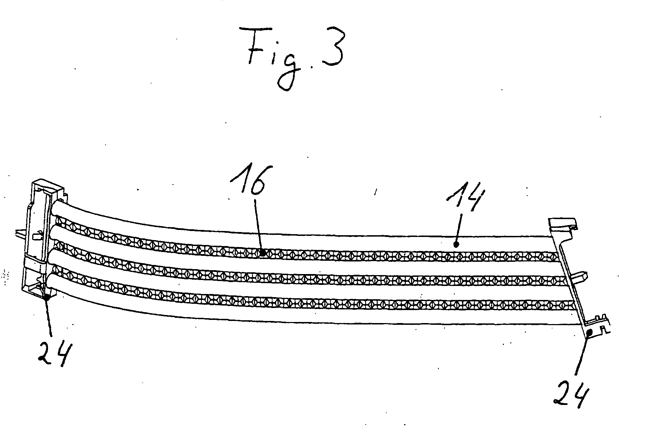

Figur 3 zeigt eine der gefeilten und geneigten Fahrzeugkontur angepasste Lichtleitelemente- Rückstrahlertripelbaueinheit (14/16). Hierbei sind seitlich an die Baueinheit Trägerelemente (24) mit angespritzt. Diese Trägerelemente (24) dienen zum einen als Träger für die Lichtleitelemente- Rückstrahlertripelbaueinheit (14/16) in dem nicht dargestellten Grundteil (10) und zum anderen als Träger für die nicht dargestellten Leuchtmittel.

### Bezugszeichenliste:

- 10: Grundteil
- 12: Abschlussscheibe
- 14: Lichtleitelement
- 16: Rückstrahlertripel
- 18: Lichtumlenkprismen
- 20: Steg
- 22: Lichteinkoppelbereich
- 24: Trägerelement

## Patentansprüche

1. Fahrzeugleuchte bestehend aus einem am Fahrzeug festsetzbaren Grundteil (10) und einer mit dem Grundteil (10) verbundenen lichtdurchlässigen Abschlussscheibe (12) wobei in dem Grundteil (10) über- oder nebeneinander verlaufende, langgestreckte Lichtleitelemente (14) angeordnet sind, **dadurch gekennzeichnet,**
**dass** die Lichtleitelemente (14) deutlich beabstandet zueinander angeordnet sind und in den so entstandenen Zwischenräumen Rückstrahtertripel (16) angeordnet sind, die zumindest partiell als optisch wirksame Rückstrahlertripel (16) ausgebildet sind.

2. Fahrzeugleuchte nach Anspruch 1, **dadurch gekennzeichnet, dass** die Lichtleitelemente (14) und die Rückstrahlertripel (16) einstückig ausgeführt sind.

3. Fahrzeugleuchte nach Anspruch 2, **dadurch gekennzeichnet, dass** die Lichtleitelemente (14) und die Rückstrahlertripel (16) uber schmale Stege (20) miteinander verbunden sind.

4. Fahrzeugleuchte nach einem der vorstehenden Ansprüche, **dadurch gekennzeichnet, dass** alle die als Spiegelreflexionstripel ausgebildeten Rückstrahlertripel (16) parallel der Rückstrahlerfunktionsrichtung ausgerichtet sind.

5. Fahrzeugleuchte nach einem der vorstehenden Ansprüche, **dadurch gekennzeichnet, dass** die Rückstrahlertripel (16) in den gefeilt und/oder geneigt verlaufenden Bereichen der Leuchte stufig angeordnet sind.

6. Fahrzeugleuchte nach einem der vorstehenden Ansprüche, **dadurch gekennzeichnet, dass** die Rückstrahlertripel (16) auf ihrer der Abschlussscheibel (12) zugewandten Seite reflektierend beschichtet sind.

7. Fahrzeugleuchte nach Anspruch 6, **dadurch gekennzeichnet, dass** die Rückstrahlertripel (16) auf ihrer der Abschlussscheibe (12) zugewandten Seite metallbedampft sind.

8. Fahrzeugleuchte. nach einem der vorstehenden Ansprüche, **dadurch gekennzeichnet, dass** die Abschlussscheibe (12) zumindest partiell optikfrei ausgeführt ist.

## Claims

1. A vehicle light consisting of a base component (10) which can be attached to the vehicle, and a transparent cover lens (12) connected to the base component (10), long light-conducting elements (14) being disposed in the base component (10) so as to extend one above the other or side by side, **characterized in that** the light-conducting elements (14) are clearly disposed at a distance from one another, and reflector triplets (16) are disposed in the intermediate spaces thus produced, said triplets (16) at least partly taking the form of optically active reflector triplets (16).

2. A vehicle light according to Claim 1, **characterized in that** the light-conducting elements (14) and the reflector triplets (16) are designed in one piece.

3. A vehicle light according to Claim 2, **characterized in that** the light-conducting elements (14) and the reflector triplets (16) are joined together by means of narrow straps (20).

4. A vehicle light according to one of the preceding claims, **characterized in that** all the reflector triplets (16) taking the form of regular-reflection triplets are oriented parallel to the operating direction of the reflectors.

5. A vehicle light according to one of the preceding claims, **characterized in that** the reflector triplets (16) are arranged in steps in the shaped and/or inclined regions of the light.

6. A vehicle light according to one of the preceding claims, **characterized in that** the reflector triplets (16) are reflectively coated on their side facing the cover lens (12).

7. A vehicle light according to Claim 6, **characterized in that** the reflector triplets (16) are metallized on their side facing the cover lens (12).

8. A vehicle light according to one of the preceding claims, **characterized in that** the cover lens (12) is designed to be at least partly optics-free.

## Revendications

1. Feu de véhicule constitué par une partie de base (10) susceptible d'être fixée sur le véhicule et par une plaque d'éclairement (12) transparente reliée à la partie de base (10), des éléments de guide de lumière (14) allongés, s'étendant les uns au-dessus des autres ou à côté des autres, étant agencés dans la partie de base (10), **caractérisé en ce que** les éléments de guide de lumière (14) sont agencés avec distance nette les uns par rapport aux autres et **en ce que** dans les espaces intermédiaires ainsi formés sont agencés des rétroréflecteurs en trièdres (16) qui sont réalisés au moins partiellement sous forme de rétroréflecteurs en trièdres à effet optique.

2. Feu de véhicule selon la revendication 1, **caractérisé en ce que** les éléments de guide de lumière (14) et les rétroréflecteurs en trièdres (16) sont réalisés d'un seul tenant.

3. Feu de véhicule selon la revendication 2, **caractérisé en ce que** les éléments de guide de lumière (14) et les rétroréflecteurs en trièdres (16) sont reliés via des barrettes étroites.

4. Feu de véhicule selon l'une des revendications précédentes, **caractérisé en ce que** tous les rétroréflecteurs en trièdres (16) réalisés sous forme de réflecteurs spéculaires en trièdres sont orientés parallèlement à la direction fonctionnelle des rétroréflecteurs.

5. Feu de véhicule selon l'une des revendications précédentes, **caractérisé en ce que** les rétroréflecteurs en trièdres (16) sont agencés en gradins dans les zones du feu s'étendant en biseau et/ou inclinées.

6. Feu de véhicule selon l'une des revendications précédentes, **caractérisé en ce que** sur leur face tournée vers la plaque d'éclairement (12), les rétroréflecteurs en trièdres (16) sont dotés d'un revêtement réflecteur.

7. Feu de véhicule selon la revendication 6, **caractérisé en ce que** les rétroréflecteurs en trièdres (16) sont métallisés sous vide sur leur face tournée vers la plaque d'éclairement (12).

8. Feu de véhicule selon l'une des revendications précédentes, **caractérisé en ce que** la plaque d'éclairement (12) est réalisée au moins partiellement sans optique.
